# EUROPEAN PATENT APPLICATION

(11) **EP 4 254 905 A1**
(43) Date of publication of application: **04.10.2023**
(21) Application number: 22795722.2
(22) Date of filing: 25.04.2022
(51) Int. Cl.: H04L 67/06

(54) **SERIALIZING METHOD, DESERIALIZING METHOD, INFORMATION PROCESSING PROGRAM, INFORMATION PROCESSING DEVICE, AND COMMUNICATION SYSTEM**

(30) Priority: 30.04.2021 JP 2021078133
(71) Applicant: SoftGear Co., Ltd., Tokyo 160-0022 (JP)
(72) Inventor: MIYANAGA Naoki, Tokyo 160-0022 (JP)
(74) Representative: Witthoff Jaekel Steinecke Patentanwälte PartG mbB
(86) International application number: PCT/JP2022/018731
(87) International publication number: WO 2022/230809

(57) **Abstract**

To provide a serialization method, a deserialization method, an information processing program, an information processing apparatus, and a communication system that flexibly support communication conditions and reduce the size of communication data.

A server device 1 includes a serialization means 103 configured to: describe information associated with a class of an object; sort field names according to a predetermined order; describe field values corresponding to the field names in a sorted order; and output as serialized data, and a deserialization means 101 configured to: acquire information associated with a class from serialized data of an object; acquire field information of the class; acquire values corresponding to field values of the serialized data of the object as being arranged corresponding to the acquired field names sorted in a predetermined order; restore the values together with the acquired field names; and output as a restored object.

## Description

### Technical Field

The present invention relates to a serialization method, a deserialization method, an information processing program, an information processing apparatus, and a communication system.

### Background Art

As a conventional technique, an information processing apparatus that reduces a size of communication data upon serialization of an object has been proposed (see, for example, Patent Literature 1).

The information processing apparatus disclosed in Patent Literature 1 creates communication data by, upon serialization of a data object, not arranging all pieces of data in series but segmenting the data into a plurality of pieces of data and arranging, while omitting segmentation of data that is not necessarily required to be transmitted. The communication data is transmitted with an omission flag bit indicating the presence or absence of the omission being added to each of the plurality of segments, and a receiving side device correctly restores the received communication data on the basis of the omission flag bit.

### Citation List

### Patent Literature

Patent Literature 1: JP 2008-203959 A

### Summary of Invention

### Technical Problem

However, although the information processing apparatus of Patent Literature 1 achieves reduction in communication time by reducing the data size through omission of a part of the communication data, what is transmitted is only the omission flag bit, and for example, information such as the type of the object to be serialized and the arrangement order of the data in the object is not transmitted. In other words, the information processing apparatus of Patent Literature 1 assumes that these pieces of information are shared in advance between the order transmitting side and the receiving side, and involves a problem of not supporting communication that does not depend on the type of the object. In addition, since the data transmission order is constant, there is also a problem that, for example, objects with inheritance or the like, communication between different languages, or communication between different compiler versions are not supported.

Therefore, an object of the present invention is to provide a serialization method, a deserialization method, an information processing program, an information processing apparatus, and a communication system that flexibly support communication conditions and reduce the size of communication data.

### Solution to Problem

In order to achieve the above-described objective, a mode of the present invention provides the following serialization method, deserialization method, information processing program, information processing apparatus, and communication system.

[1] A serialization method including:
   a step of describing information associated with a class of an object;
   a step of sorting field names of the object according to a predetermined order and describing field values corresponding to the field names in a sorted order; and
   a step of outputting the described information associated with the class and the sorted field values as serialized data.
[2] The serialization method according to the above [1], in which in a case where the object is an instance of a subclass, field names defined by a superclass are sorted in a predetermined order together with the field names defined by the subclass.
[3] The serialization method according to the above [1] or [2], in which in the step of describing the field values in the sorted order, in a case where it is defined to describe the values of the fields of the object as an array, the values of the fields of the object are described as the array according to the sorted order.
[4] The serialization method according to any one of the above [1] to [3], in which the information associated with the class is a hash value obtained by converting at least a class name of the object by a predetermined function.
[5] A deserialization method including:
   a step of acquiring information associated with a class from serialized data of an object;
   a step of acquiring field information of the class;
   a step of acquiring values corresponding to field values of the serialized data of the object as being arranged corresponding to the acquired field names sorted in a predetermined order, and restoring the values together with the acquired field names; and
   a step of outputting the acquired information associated with the class, the field information, and the field values as a restored object.
[6] The deserialization method according to the above [5], in which in the step of restoring, in a case where the field values of the object are described as an array, the values corresponding to the field values in the serialized data of the object are acquired as being described as the array by sorting the acquired field names in the predetermined order, and restored together with the acquired field names.
[7] An information processing program that causes a computer to function as a serialization means configured to: describe information associated with a class of an object; sort field names of the object according to a predetermined order; describe field values corresponding to the field names in a sorted order; and output the described information associated with the class and the sorted field values as serialized data.
[8] An information processing program that causes a computer to function as a deserialization means configured to: acquire information associated with a class from serialized data of an object; acquire field information of the class; acquire values corresponding to field values of the serialized data of the object as being arranged corresponding to the acquired field names sorted in a predetermined order; restore the values together with the acquired field names; and output the acquired information associated with the class, the field information, and the field values as a restored object.
[9] An information processing apparatus including a serialization means configured to: describe information associated with a class of an object; sort field names of the object according to a predetermined order; describe field values corresponding to the field names in a sorted order; and output the described information associated with the class and the sorted field values as serialized data.
[10] An information processing apparatus including a deserialization means configured to: acquire information associated with a class from serialized data of an object; acquire field information of the class; acquire values corresponding to field values of the serialized data of the object as being arranged corresponding to the acquired field names sorted in a predetermined order; restore the values together with the acquired field names; and output the acquired information associated with the class, the field information, and the field values as a restored object.
[11] A communication system configured by communicably connecting a plurality of the information processing apparatuses according to the above [9] and [10].

### Advantageous Effects of Invention

According to the invention of claims 1, 5, 8, 9, 10, and 11, it is possible to flexibly support communication conditions and to reduce the size of communication data.

According to the invention of claims 2 and 6, even in a case where an object is an instance of a subclass, it is possible to flexibly support communication conditions and to reduce the size of communication data.

According to the invention of claims 3 and 7, even in a case where a value of a field of an object is defined to be an array, it is possible to flexibly support communication conditions and to reduce the size of communication data.

According to the invention of claim 4, the information associated with a class may be a hash value obtained by converting at least a class name of the object by a predetermined function.

### Brief Description of Drawings

Fig. 1 is a schematic diagram illustrating an example of a configuration of a communication system according to an embodiment.
Fig. 2 is a block diagram illustrating a configuration example of a server device according to the embodiment.
Fig. 3A is a diagram illustrating a configuration of an item correspondence table.
Fig. 3B is a diagram illustrating a configuration of an item correspondence table.
Fig. 4 is a flowchart illustrating an example of a serialization operation.
Fig. 5 is a flowchart illustrating another example of the serialization operation.
Fig. 6 is a flowchart illustrating another example of the serialization operation.
Fig. 7 is a flowchart illustrating an example of a deserialization operation.
Fig. 8 is a flowchart illustrating another example of the deserialization operation.
Fig. 9 is a flowchart illustrating an example of the serialization operation.
Fig. 10A is a diagram illustrating a specific example of a class configuration of an "Employee" class.
Fig. 10B is a diagram illustrating a specific example of a class configuration of a "Manager" class.
Fig. 10C is a diagram illustrating a specific example of a class configuration of a "Project" class.
Fig. 11A is a diagram illustrating an example of a configuration of data obtained by serializing an instance.
Fig. 11B is a diagram illustrating an example of a configuration of data obtained by serializing an instance.
Fig. 11C is a diagram illustrating an example of a configuration of data obtained by serializing an instance.
Fig. 12A is a diagram illustrating a specific example of a class configuration of the "Employee" class.
Fig. 12B is a diagram illustrating a specific example of a class configuration of the "Manager" class.
Fig. 12C is a diagram illustrating a specific example of a class configuration of the "Project" class.
Fig. 13A is a diagram illustrating an example of a configuration of data obtained by serializing an instance.
Fig. 13B is a diagram illustrating an example of a configuration of data obtained by serializing an instance.
Fig. 13C is a diagram illustrating an example of a configuration of data obtained by serializing an instance.
Fig. 13D is a diagram illustrating an example of a configuration of data obtained by serializing an instance.
Fig. 14A is a diagram illustrating a specific example of a class configuration of the "Employee" class.
Fig. 14B is a diagram illustrating a specific example of a class configuration of the "Manager" class.
Fig. 14C is a diagram illustrating a specific example of a class configuration of the "Project" class.
Fig. 15A is a diagram illustrating an example of a configuration of data obtained by serializing an instance.
Fig. 15B is a diagram illustrating an example of a configuration of data obtained by serializing an instance.
Fig. 15C is a diagram illustrating an example of a configuration of data obtained by serializing an instance.
Fig. 15D is a diagram illustrating an example of a configuration of data obtained by serializing an instance.

### Description of Embodiments

### [Embodiment]

### (Configuration of communication system)

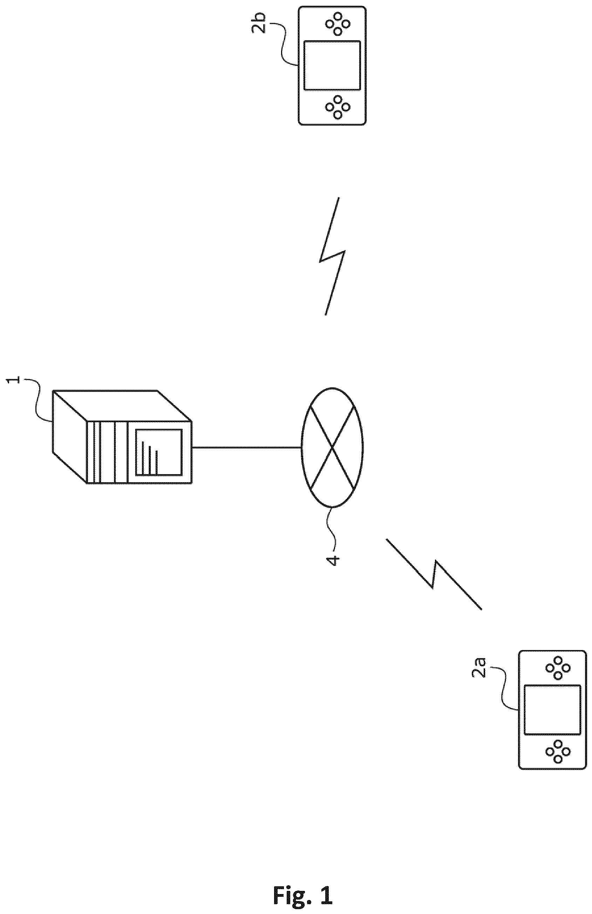

Fig. 1 is a schematic diagram illustrating an example of a configuration of a communication system according to an embodiment.

This communication system is configured by connecting a server device 1 as an information processing apparatus and terminal devices 2a and 2b in a mutually communicable manner via a network.

The server device 1 is a server type information processing apparatus which operates in response to a request from the terminal devices 2a and 2b operated by an operator, and includes, in a main body thereof, electronic components such as a central processing unit (CPU), a hard disk drive (HDD), a flash memory, a volatile memory, and a LAN board (wireless/wired) having functions for processing information. The server device 1 communicates with the terminal devices 2a and 2b and transmits and receives data to synchronize data operating on the terminal devices 2a and 2b, and is, for example, a game server or the like. Note that the server device 1 may be either configured with a plurality of clusters or configured to execute distributed processing.

The terminal devices 2a and 2b are terminal-type information processing apparatuses which operate on the basis of a program, and each include, in a main body thereof, electronic components such as a CPU, a HDD, or a flash memory having functions for processing information. The terminal devices 2a and 2b operate on the basis of a program such as a massively multiplayer online game (MMOG), for example, sequentially output data as a result of the operation to the server device 1, and receive data as a result of the operation of another terminal from the server device 1 to frequently synchronize the game objects between the terminals 2a and 2b. Note that, although the terminal device 2 is illustrated as two devices, the terminal device 2 may be a single device or may be configured with three or more devices.

The network 4 is a communication network enabling high-speed communication, and is, for example, a wired or wireless communication network such as an intranet or a local area network (LAN).

As an example, the server device 1 and the terminal devices 2a and 2b serialize information held as an object in each device upon transmission of data between the devices, and deserialize the information upon reception of the data. In addition, information held as an object in each device is serialized upon recording in a storage unit such as an HDD, and is deserialized upon reading. Details of the serialization and the deserialization are specifically described below in regard to the embodiment.

In addition, terms such as "object", "class", "field", " instance", and "type" used in the present embodiment are used synonymously with those used in the context of, for example, Java (registered trademark), C++, C#, Python, JavaScript (registered trademark), Ruby, or the like, but hereinafter, the class and the instantiated class (instance) may be collectively referred to as an "object". Furthermore, although function names and code examples of the Java language are exemplified in the description, other object-oriented languages also have similar corresponding features. A "class" is a collection of processes for executing a program, and the class includes a method for executing the processes and a field as a variable used when the method executes the processes. An object has at least zero field, and each field has one or a plurality of field names and field values. A "type" may be a numerical value, a string, a logical value, null, undefined, and an object type, and may also be referred to as a "type". A class may include another class therein, and may inherit other classes. In addition, the field value has a certain value in principle, but may also be a variable that is not defined until the processing stage. In addition, a "primitive type" is not an object type, that is, is a type of only a value having no field or method, and a "primitive value" refers to a value thereof.

Furthermore, "serialization" may be referred to as "serialization" or "serialization", and "to serialize" may be referred to as "to serialize". Similarly, "deserialization" may be referred to as "deserialization", "reverse serialization", or "serialization restoration", and "to deserialize" may be referred to as "to deserialize".

### (Configuration of server device)

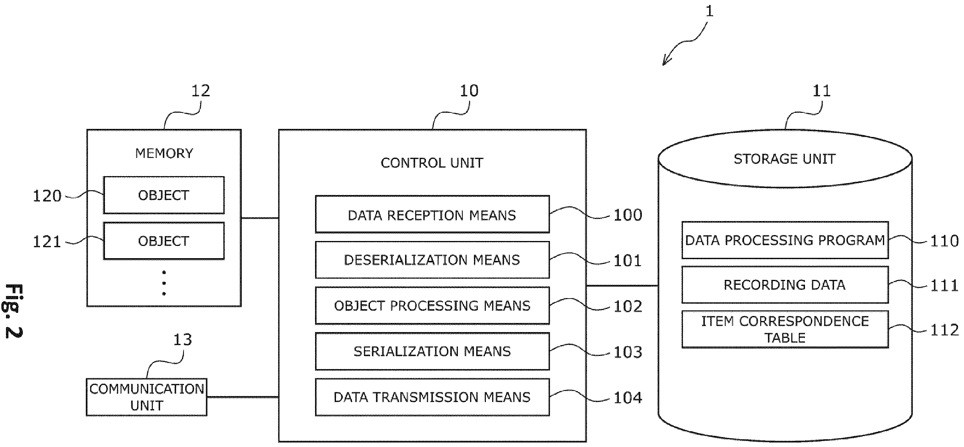

Fig. 2 is a block diagram illustrating a configuration example of a server device 1 according to the embodiment.

The server device 1 includes a control unit 10 that includes a central processing unit (CPU) and the like, controls each unit, and executes various programs, a storage unit 11 that includes a storage medium such as a flash memory and stores information, a memory 12 that temporarily stores information, and a communication unit 13 that communicates with the outside via a network.

The control unit 10 functions as a data reception means 100, a deserialization means 101, an object processing means 102, a serialization means 103, a data transmission means 104, and the like, by executing an information processing program 110 as the information processing program described later.

The data reception means 100 receives the serialized data from the terminal devices 2a and 2b via the communication unit 13.

The deserialization means 101 deserializes the data received by the data reception means 100 and describes the deserialized data as the objects 120, 121,... in the memory 12. Details of the deserialization are described later.

The object processing means 102 executes necessary processes for the objects 120, 121,....

The serialization means 103 serializes the objects 120, 121,... (or objects obtained by processing the objects 120, 121,...) in the memory 12. Furthermore, the serialization means 103 may serialize the objects 120, 121,... and save the serialized objects as recording data 111. Details of the serialization are described later.

The data transmission means 104 transmits the data serialized by the serialization means 103 to the terminal devices 2b and 2a via the communication unit 14.

The storage unit 11 stores an information processing program 110 that causes the control unit 10 to operate as the means 100 to 104 described above, the recording data 111, an item correspondence table 112, and the like.

The memory 12 temporarily stores the objects 120, 121,... and other information.

Note that the terminal devices 2a and 2b include an operation unit and a display unit in addition to the same configuration as the server device 1. Description is omitted for the common configuration with the server device 1.

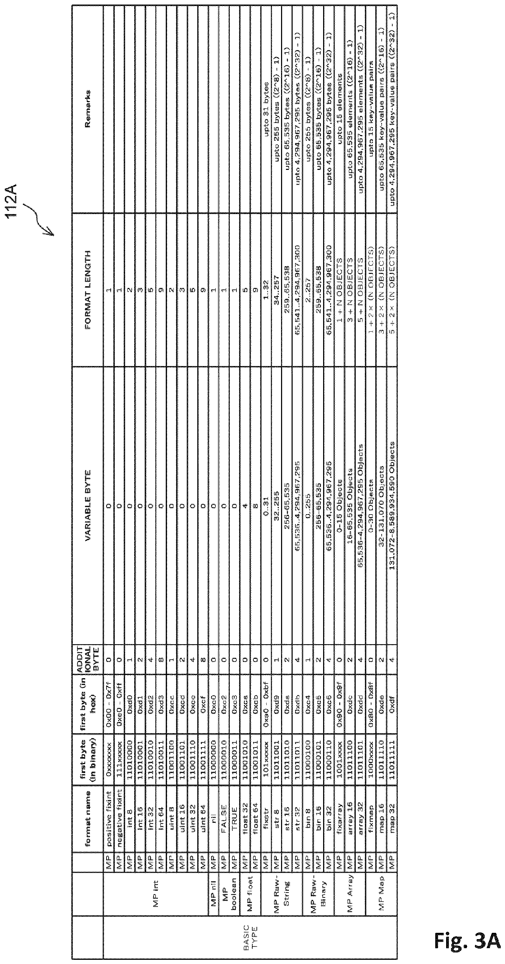

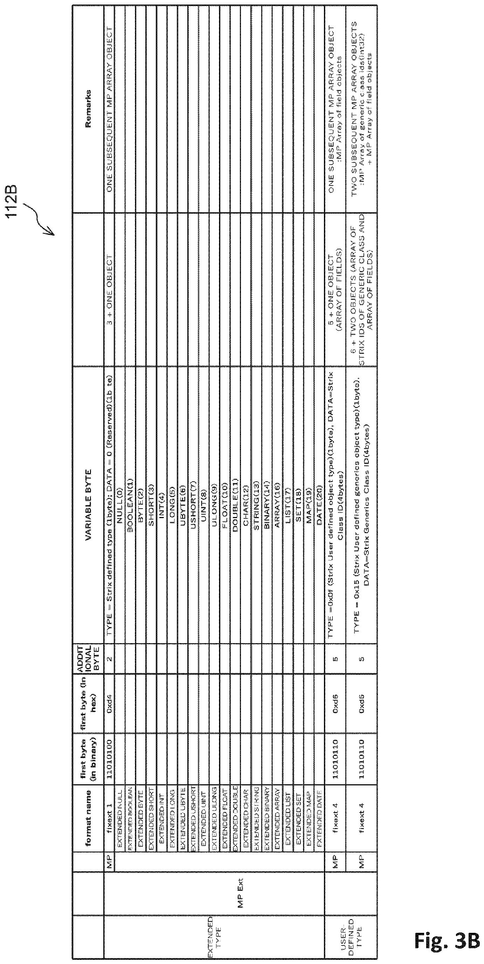

Figs. 3A and 3B are diagrams illustrating a configuration of the item correspondence table 112.

The item correspondence table 112 (the item correspondence tables 112A and 112B are collectively denoted by 112) is an example of a table defining the types of data handled in the object, including the item correspondence table 112A of the basic types and the item correspondence table 112B of the extended types and the user defined types, adopting a part of the coding (https://github.com/msgpack/msgpack/blob/master/spec.md) of the Message Pack (https://msgpack.org/). In the present embodiment, a part of coding of the MessagePack is used, and the extended and implemented MessagePack is shown. According to the MessagePack specification, each element coded by serialization is described, in principle, as data of a block starting from a format identifier defined by the MessagePack specification. According to the MessagePack specification, a plurality of blocks can be described in a nested manner in a block. The item correspondence table 112A is a definition of a format of the MessagePack, while 112B is a definition of a format in which a unique extension is made to the MessagePack to indicate a method for carrying out the technique disclosed in the present invention.

The item correspondence table 112 includes "format name" indicating a format name, "first byte (in binary)" indicating content of the first byte of a data block in binary representation when coding was carried out in binary (binary notation), "first byte (in hex)" indicating content of the first byte of the data block in HEX (hexadecimal), "Additional byte" indicating the number of bytes to be fixedly added after the second byte of the data block, "Variable byte" indicating a value or a range of the number of variable bytes subsequent to the first byte and the next fixed additional byte (if any) of the data block, "Format length" indicating a value or a range of a format length of the entire block, and "Remarks" indicating special notes.

### (Operation of information processing apparatus)

Next, effects of the present embodiment are described respectively in (1) Basic operation, (2) Serialization operation, and (3) Deserialization operation.

### (1) Basic operation

The terminal devices 2a and 2b execute, for example, a program of a network competition game, and sequentially process a plurality of objects in accordance with the execution of the program. The server device 1 synchronizes objects processed when the program is executed in the terminal devices 2a and 2b. The server device 1 and the terminal devices 2a and 2b mutually transmit objects with changes, and synchronize by reflecting the changes to the received objects.

The server device 1 and the terminal devices 2a and 2b serialize information held as an object in each device upon transmission of data between the devices, and deserialize the information upon reception of the data. In addition, information held as an object in each device is serialized upon recording in a storage unit such as an HDD, and is deserialized upon reading. The serialization operation and the deserialization operation of the server device 1 and the terminal devices 2a and 2b, and the operations associated therewith are described hereinafter. Since the operations are common to all the devices, the operations of the server device 1 are described as a representatives.

Upon reception of data from the terminal devices 2a and 2b during data synchronization, the data reception means 100 of the server device 1 receives serialized data from the terminal devices 2a and 2b via the communication unit 13.

Next, the deserialization means 101 of the server device 1 deserializes the data received by the data reception means 100 and describes the deserialized data as the objects 120, 121,... in the memory 12, to synchronize the contents of the objects with the terminal devices 2a and 2b. Note that details of the deserialization are described in the section "(3) Deserialization operation".

Next, the object processing means 102 of the server device 1 executes necessary processes for the objects 120, 121,....

Next, the serialization means 103 of the server device 1 serializes (serializes) the objects 120, 121,... in the memory 12. Furthermore, the serialization means 103 may serialize the objects 120, 121,... and save the serialized objects as recording data 111. Details of the serialization will be described in the section "(2) Serialization operation".

Next, the data transmission means 104 of the server device 1 transmits the data serialized by the serialization means 103 to the terminal devices 2b and 2a via the communication unit 14.

### (2) Serialization operation

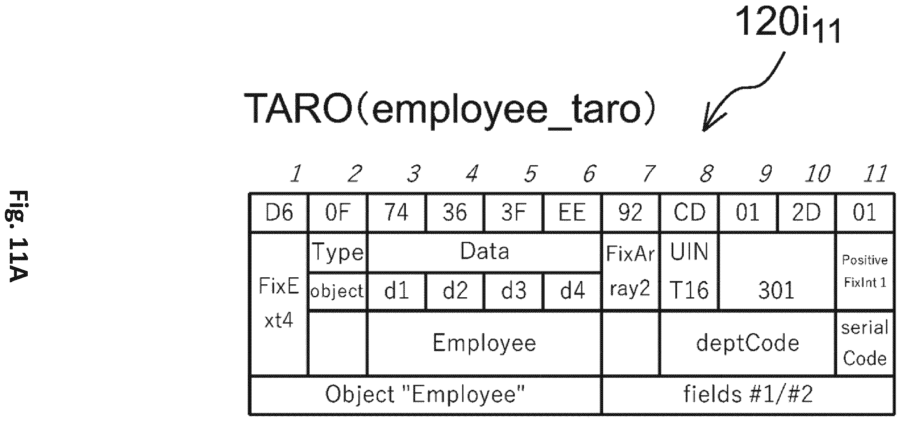

First, as a basic serialization procedure, the serialization means 103 of the server device 1 records information associated with a class of an object to be serialized as serialized data, and subsequently sorts field names in alphabetical order and records only field values (without recording the field names). Note that the recording order of the information and the operational order of the recording may be changed as long as they are based on a predetermined rule. Specific recording order is illustrated in Figs. 11A to 11C, 13A to 13D, and 15A to 15D.

Note that "information associated with a class" is information of the class necessary for restoring the class upon deserialization, and includes a class name and a type definition of the class. In the case of an instance of the generic class, information associated with the class of the type parameter is further included. Since it is not practical to encode the class definition itself, the same class definition may be provided on the serialization side and the deserialization side and expressed by a string of a complete class name. In the present embodiment, with regard to a class used in the serialization (the same applies to the deserialization), information associated with a class ID is prepared in advance, and the class is associated with the class ID. As a specific example of the association, a hash function is used to calculate a string of the class name (jp.co.soft-gear.sample.Employees, etc.) and generate information in which a four-byte hash value is associated therewith. In the serialization, when the complete class name (full name of class name, i.e., a full path such as jp.co.soft-gear.sample.Employee instead of a short name such as Employee) is specified, the complete class name is converted into a four-byte value on the basis of pre-registered information, and the class name is serialized as "information regarding a class " using this value. Note that the hash value is uniquely determined from the class name, but it is necessary to prepare a sufficient amount of data so that the class name is also uniquely determined from the hash value. In the present embodiment, four bytes (UINT32) are prepared. By preparing four bytes, distribution to more than 4.2 billion hash values is enabled, and it is extremely rare that different classes have the same hash value and such a situation can be reduced. It is also possible to create an application-specific correspondence table (correspondence table of classes and class IDs) at the expense of versatility. In this case, if the number of objects to be serialized is 256 or less, the information corresponding to the class can be expressed with only one byte. Next, an example of the serialization operation according to the type of the object is described.

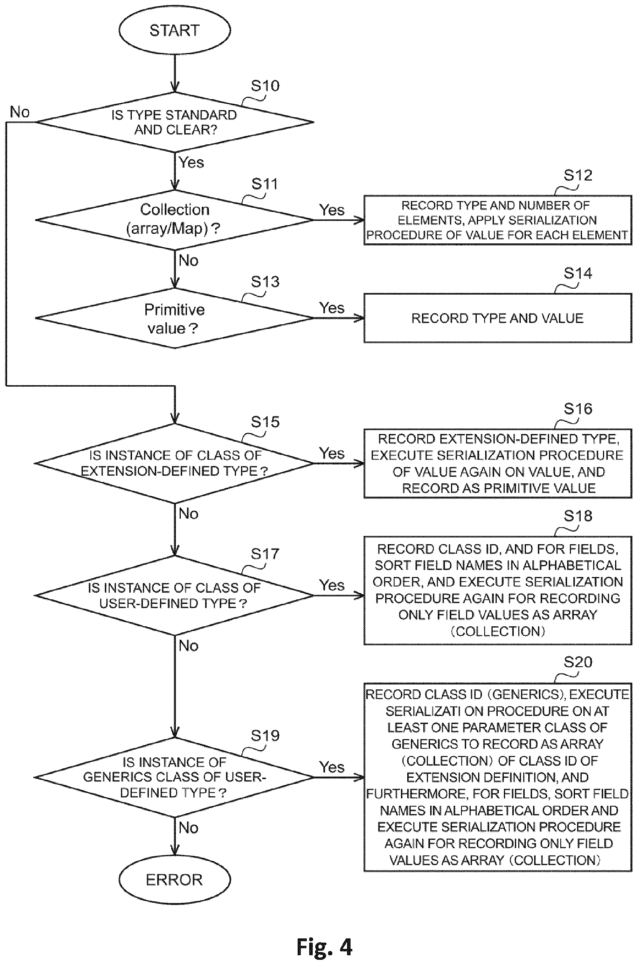

Fig. 4 is a flowchart illustrating an example of a serialization operation.

The serialization means 103 confirms the content of the object to be serialized by: first confirming whether the type of the object is standard and clear (S10), and in a case where the type is standard and clear (S10; Yes), confirming whether the object is a Collection object (S11). Note that, as used herein, the term "standard" refers to a type belonging to the item correspondence table 112A shown in Fig. 3A. Also, the term "clear" refers to a fixed type that is unchanged by instantiation. For example, this is the case in which, in an instance of the generic type object, the type of the field is not a parameter type specified as a parameter upon instantiation. In another example, this is the case in which the type of the value of the field matches the defined type of the field and is not a subclass. In other words, the type is either a Primitive type or a Collection type.

Next, in a case where the object to be serialized is a Collection object (S11; Yes), the serialization means 103 records the type and the number of elements of each element of the array (Array or Map), and executes a value serialization procedure for each element (S12).

In addition, in a case where the object to be serialized is not a Collection object (S11; No), the serialization means 103 confirms whether the object is a Primitive value (S13), and in a case where the object is a Primitive value (S13; Yes), records the type and the value (S14).

Furthermore, in a case where the type of the object to be serialized is not standard and/or not clear (S10; No), the serialization means 103 confirms whether the object is an instance of a class of an extension-defined type (S15), and in a case where the object is an instance of the class of the extension-defined type (S15; Yes), records the type of the extension-defined type, executes serialization on the value, and records the value as a Primitive value (S16). Note that, depending on a relationship of the programming language for carrying out the deserialization, the information of the type parameter may be unnecessary upon restoration of the object through the deserialization. In this case, the type information of the extension-defined type may be omitted and the value may be recorded as a normal Primitive value. The number of bytes required for describing as serialized data can thus be saved. For example, this is the case in which the programming languages have a small difference in specification, and a field can be restored by assignment by type-casting.

Furthermore, in a case where the object to be serialized is not an instance of the class of the extension-defined type (S15; No), the serialization means 103 confirms whether the object is an instance of the class of the user-defined type (S17), and in a case where the object is an instance of the class of the user-defined type (S17; Yes), records the class ID, executes a serialization procedure, sorts the field names in alphabetical order, and records only the field values as Array (S18).

Furthermore, in a case where the object to be serialized is not an instance of the class of the user-defined type (S17; No), the serialization means 103 confirms whether the object is an instance of the Generics class of the user-defined type (S19), and in a case where the object is an instance of the Generics class of the user-defined type (S19; Yes), records the class ID (Generics), executes the serialization procedure for at least one class specified by the type parameter of Generics, executes the serialization procedure for the field while recording as Array (Collection) of the class ID, sorts the field names in alphabetical order, and records only the field values as Array (Collection) (S18).

Furthermore, in a case where the object to be serialized is not an instance of the Generics class of the user-defined type (S19; No), the serialization means 103 returns an error.

A specific operation procedure of the serialization is described hereinafter, regarding the case where the object to be serialized in steps S17 to S20 is of a class of the user-defined class.

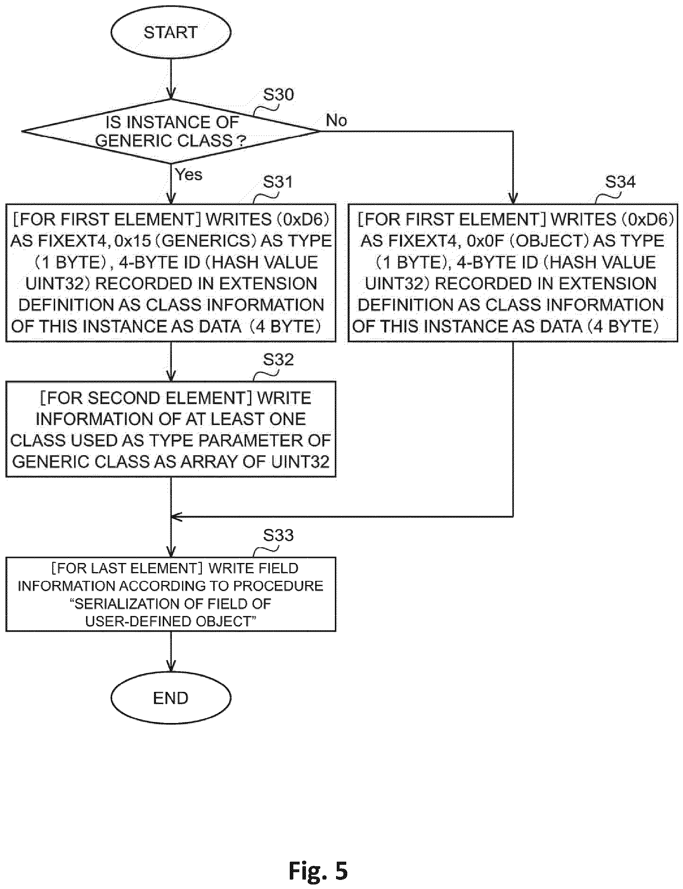

Fig. 5 is a flowchart illustrating another example of the serialization operation.

The serialization means 103 confirms whether the target object is an instance of the Generic class (S30), and in a case where the target object is an instance of the Generic class (S30; Yes), first describes the first element as FIXEXT4 of the MessagePack as follows. First, (OxD6) as an identifier of FIXEXT4, subsequently 0x15 (Generics) as TYPE (one byte), and finally a four-byte ID (hash value UINT32) registered as class information of the instance as DATA (four bytes), are respectively written as codes (S31).

Next, for the second element, information of at least one class used as a type parameter of the Generic class is written as an Array of Uint32 (S32). Note that, in the case of a user defined type object, a hash value registered in advance, and in other cases, a code of an extended type defined in advance, is used as the class information. Note that, depending on a relationship between the type of the generic object and the programming language for carrying out the serialization and the deserialization, the information of the type parameter may be unnecessary upon restoration of the object through the deserialization. In this case, the object may be serialized as a normal object without attaching the information of the type parameter. The number of bytes required for describing as serialized data can thus be saved. For example, this is the case in which the type parameter is only used for definition of the method, and not used for definition of the field. As another example, this is the case in which the programming languages have a small difference in specification, and a field can be restored by assignment by type-casting.

Furthermore, in a case where the target object is not an instance of the Generic class (S30; No), for the first element, the serialization means 103 first writes (0xD6) as an identifier of FIXEXT4, subsequently 0x0F (Object) as TYPE (one byte), and finally a four-byte ID (hash value UINT32) registered as class information of the instance as DATA (four bytes), respectively as codes (S34).

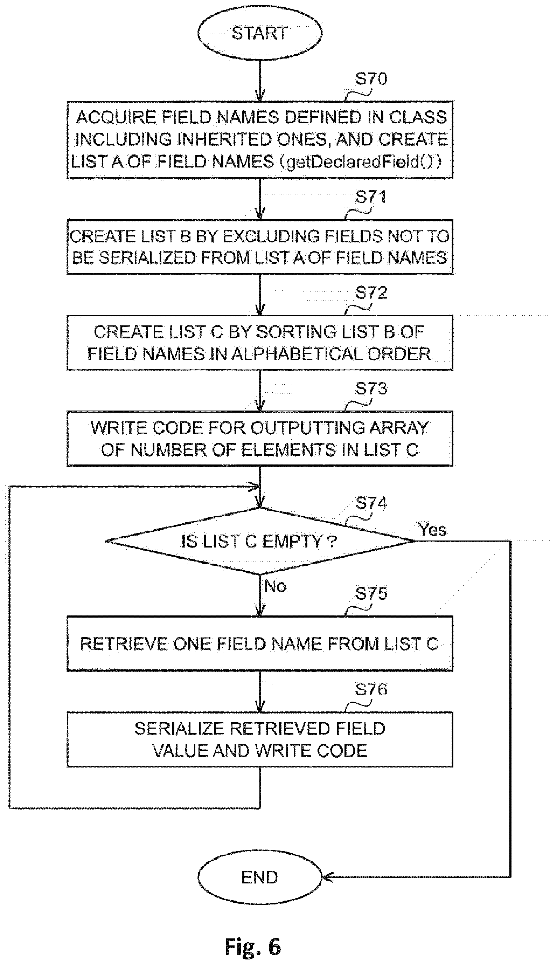

Next, for the last element (a third element for an instance of the Generics class, and a second element for an instance of the other normal classes), the field information is written as a code according to the flowchart shown in Fig. 6 (S33).

Fig. 6 is a flowchart illustrating another example of the serialization operation.

In step S33 of the flowchart in Fig. 5, the serialization means 103 first carries out reflection, acquires field names defined in a class including inherited ones, and creates a list A of field names (getDeclaredField()) (S70). Note that getDeclaredField is executed for its own class and the inherited upper class (if the hierarchy is deeper, for the entire hierarchy).

In addition, a list B is created by excluding fields not to be serialized from the list A of field names (S71). Here, Modifier of the field is checked with getModifiers. Note that fields not to be serialized, specifically Static and Transient, are excluded.

Next, a list C is created by sorting the list B of field names in alphabetical order (alternatively, by a sorting algorithm common between serialization and serialization restoration) (S72).

Next, a code for outputting arrays corresponding to the number of elements in the list C is written (S73). For example, a code "array[0]" is written when the number of elements is 0, and a code "array[3]" is written when the number of elements is 3 (the operation conforms to the MessagePack specification).

Next, the serialization means 103 confirms whether the list C is empty (S74), and if not empty (S74; No), retrieves one field name from the list C (S75), serializes the value of the retrieved field name, and writes a code (S76). Note that the serialization is recursively repeated until Primitive Value is obtained (S10 to S20 in Fig. 4 are repeated).

Next, when the list C becomes empty (S74; Yes), the serialization means 103 terminates the process.

Hereinafter, a specific example of the serialized instance is described.

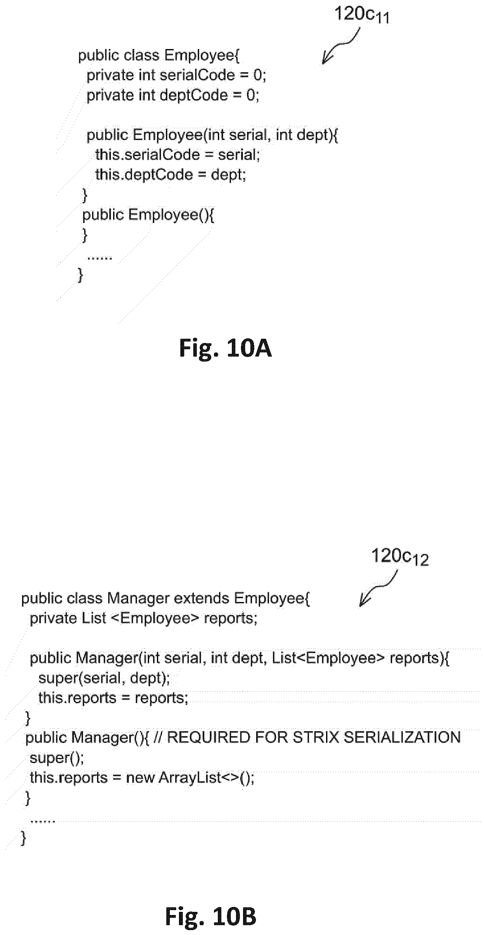

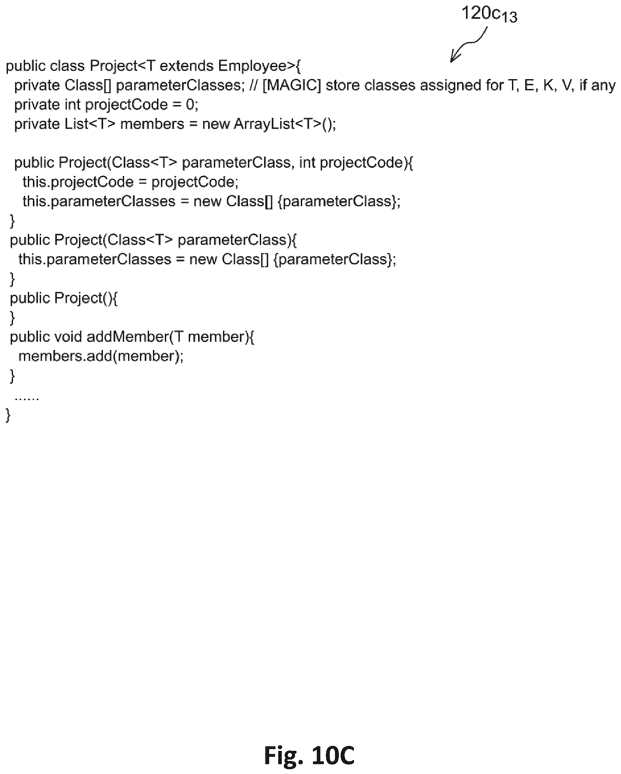

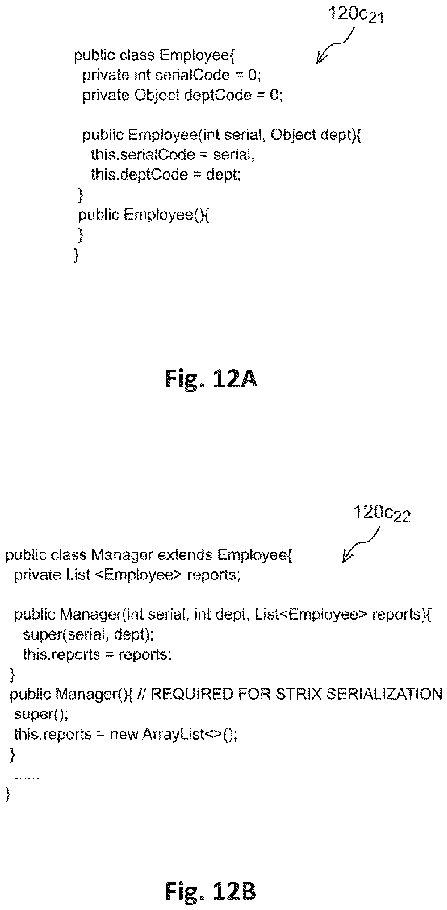

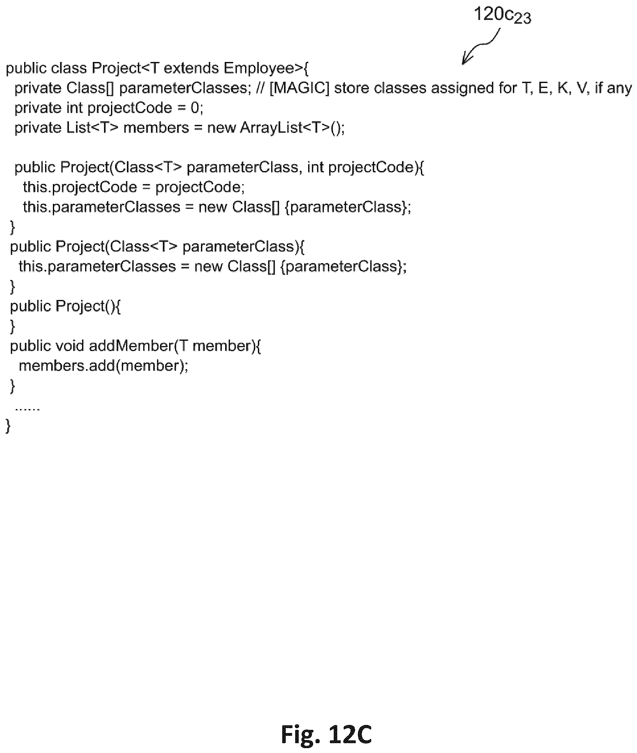

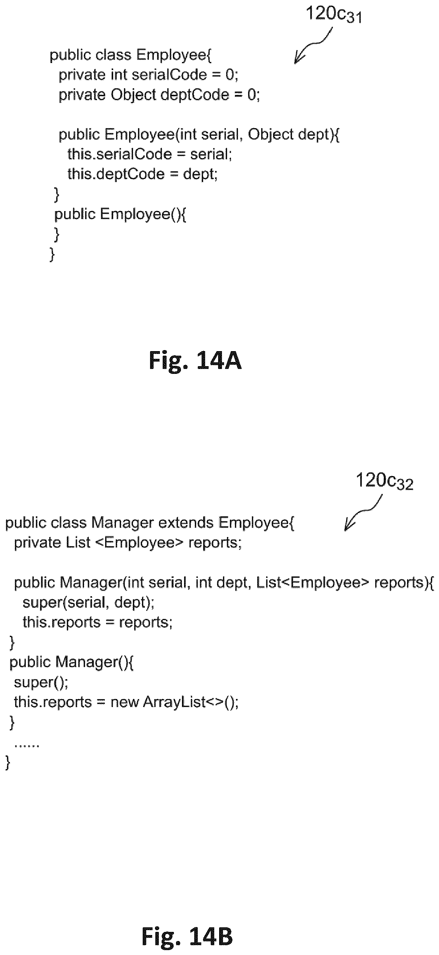

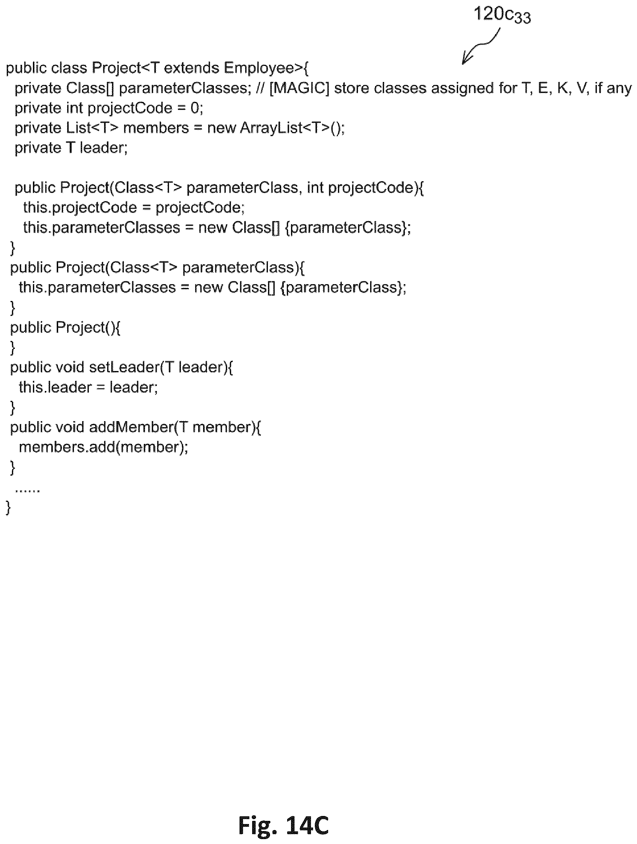

Figs. 10A to 10C are diagrams illustrating specific examples of the class configuration, and a description is given for a case where Fig. 10A is the "Employee" class, Fig. 10B is the "Manager" class, and Fig. 10C is the "Project" class, having different definitions in Figs. 12A to 12C and Figs. 14A to 14C, respectively. Figs. 11A to 11C, Figs. 13A to 13D, and Figs. 15A to 15D are examples in which the classes of Figs. 10A to 10C, Figs. 12A to 12C, and Figs. 14A to 14C are instantiated and then serialized. Note that the instantiation is carried out on the basis of the following Table 1A, Table 1B, and Table 1C, respectively.

**[Table 1A]**

| |
|---|
| Name |
| Organization |
| Employee number |
| Organization code |
| Manager |
| Taro |
| Jiro |
| Musashi |
| Hanako |
| Orange |
| Green |

**[Table 1B]**

| |
|---|
| Name |
| Organization |
| Employee number |
| Organization code |
| Manager |
| Taro |
| Jiro |
| Musashi |
| Hanako |
| Orange |
| Green |

**[Table 1C]**

| |
|---|
| Name |
| Organization |
| Employee number |
| Organization code |
| Manager |
| Taro |
| Jiro |
| Musashi |
| Hanako |
| Orange |
| Green |

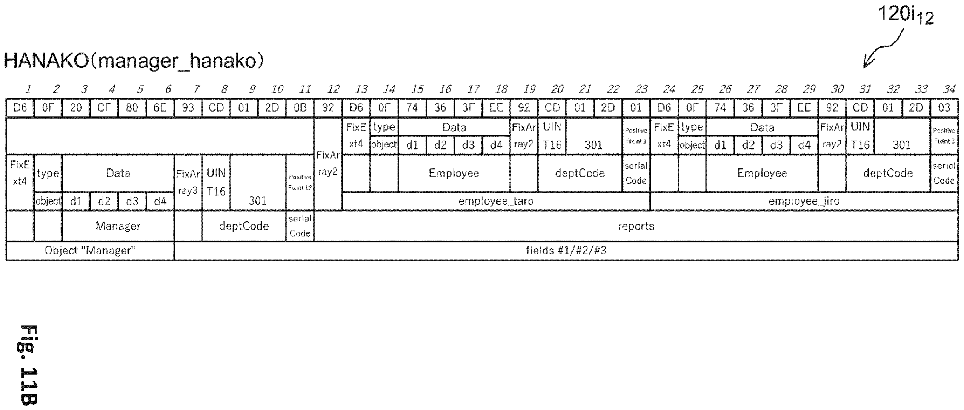

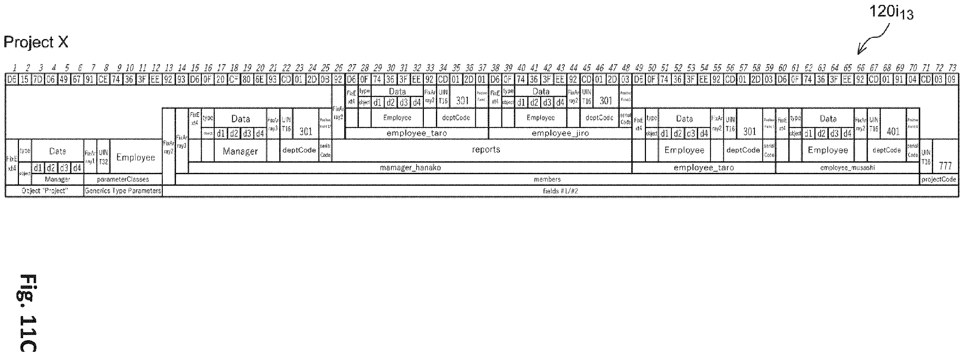

Figs. 11A to 11C are diagrams illustrating examples of a configuration of data obtained by serializing an instance, Fig. 11A being an example of data obtained by serializing an instance of Taro with regard to the Employee class, Fig. 11B being an example of data obtained by serializing an instance of Hanako with regard to the Manager class, and Fig. 11C being an example of data obtained by serializing an instance of Project X with regard to the Project class.

As illustrated in Fig. 11A, when a basic object having only a simple value as a field value is targeted, data 120i11 is coded including a hash value of a class ID associated with a format identifier "FixExt4" and a class name "Object"Employee"" (See the topmost row for a coding result). In addition, the field names are sorted not in the order "serialCode" and "deptCode" as defined by the class, but in alphabetical order "deptCode" and "serialCode", and then only the values "301" and "1" of the fields are binary-coded for the number of fields (NULL is coded as NULL).

Furthermore, as illustrated in Fig. 11B, a case is illustrated in which an object of an inherited class is targeted and the object includes another "Employee" object in a field. Data 120i12 is coded including the hash value of the class ID associated with the type "FixExt4" and the class name "Object"Maneger"", and the fields are sorted including not only the field "reports" but also the inherited fields "serialCode" and "deptCode". In addition, the field "reports" includes two "Employee" objects of the employees to be managed: Taro (the 13th byte to the 23rd byte of the italicized numbers above the topmost row); and Jiro (the 24th byte to the 33rd byte), as a two-element array (Array[2]) (Array identifier is the 12th byte, and the entire Array is from the 12th byte to the 23rd byte).

In addition, as illustrated in Fig. 11C, an instance "Project X" of the generics object "Project" is serialized to data 120i13. According to the definition of the class "Project" illustrated in Fig. 10C, a list of objects that inherit the class "Employees" specified by the parameter X is described in the field "members". In a case where ProjectX includes Hanako, Taro, and Musashi, a field "members" is described such that a list of three elements (the 14th byte to the 70th byte) including an instance of Hanako (the 15th byte to the 48th byte) of a subclass "Manager" of the class "Employees", and instances Taro (the 49th byte to the 59th byte) and Musashi (the 60th byte to the 70th byte) of the class "Employees" is an array "Array[3]"(the 14th byte to the 70th byte) of three elements. Since the fields "projectCode" and "members" except for the reserved field "parameterClasses" are normal fields of the generic class "Project", the field names are sorted in alphabetical order, and are described as an array (Array[2]) (13th byte to 73rd byte) of two elements in the order of the field "members" (14th byte to 70th byte) and the field "projectCode" (71st byte to 73rd byte). In addition, since "Project" is the generics class, as a description of the type parameter X, a hash value (from the 8th byte to the 12th byte) of a class ID, which is information associated with the class "Employees" designated upon instantiation of the instance "Project X", is described in the reserved field "parameterClasses" as an array (Array[1]) (from the 7th byte to the 12th byte) of one element.

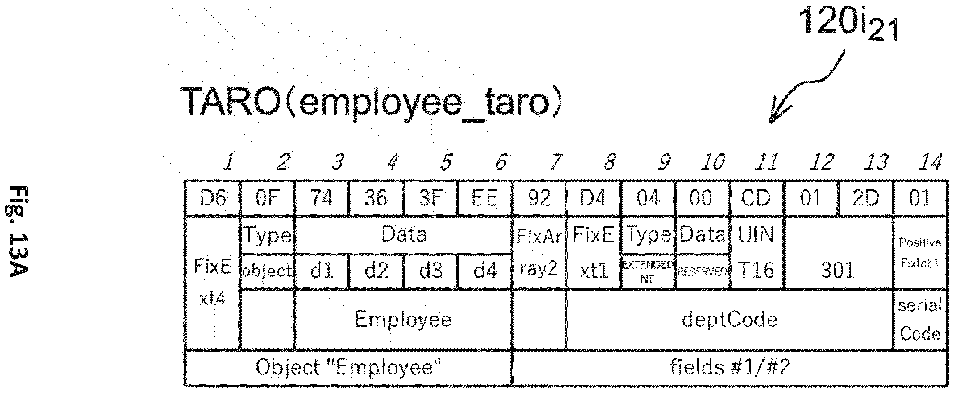

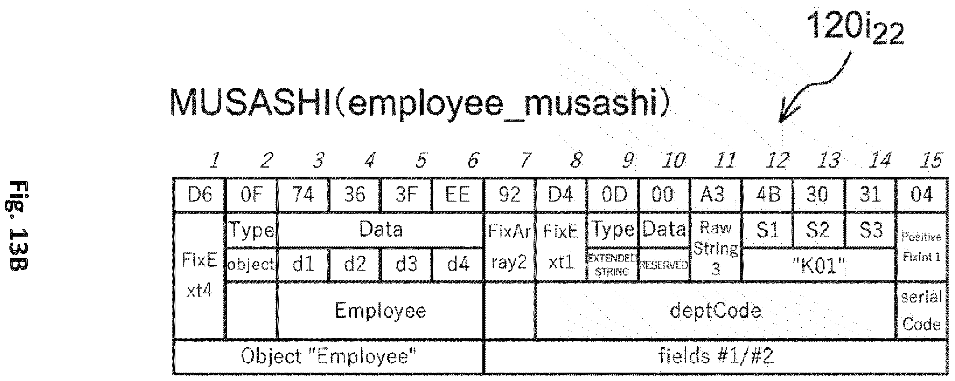

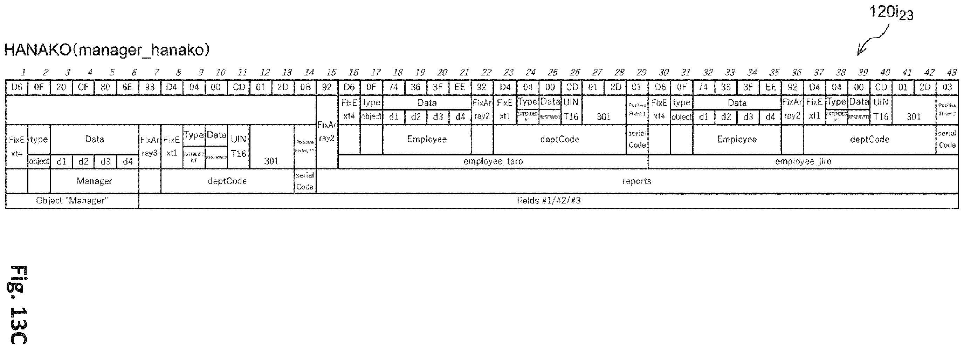

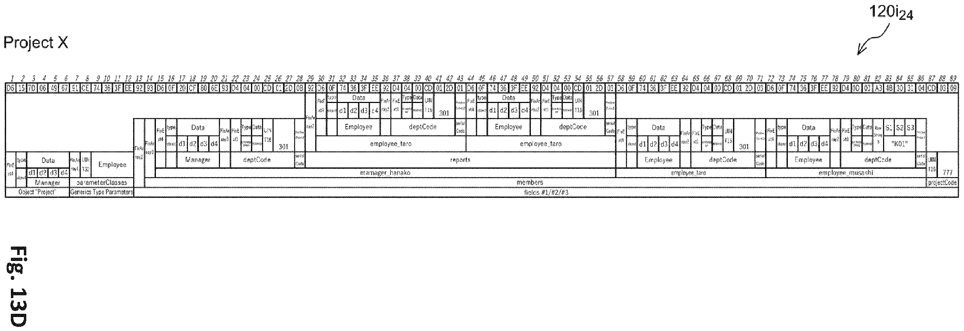

In addition, Figs. 13A to 13D are diagrams illustrating examples of a configuration of data obtained by serializing an instance, Fig. 13A being an example of data obtained by serializing an instance of Taro with regard to the "Employee" class, Fig. 13B being an example of data obtained by serializing an instance of Musashi with regard to the "Employee" class, Fig. 13C being an example of data obtained by serializing an instance of Hanako with regard to the Manager class, and Fig. 13D being an example of data obtained by serializing an instance of Project X with regard to the "Project" class. Note that the field "deptCode" of the class Object of Musashi in Fig. 13B is "K01" of String type. Since the type "String" of the value of the field is a subclass of the type "Object" of the field, and the types do not match, the type information is described in detail by using the extension-defined type so that the value of the field is correctly restored at the time of deserialization.

Note that Figs. 13A to 13D illustrate the examples illustrated in Figs. 11A to 11C in an extension-defined type (compared to the examples illustrated in Figs. 11A to 11C, the number of instances of "Musashi" (Fig. 13B) is increased). Specifically, in "D4" of the data 120i22, the type is "extended String". In addition, in order to clarify the class type of the field upon deserialization, the extended String type (ID value 0x0D) is described following the format identifier FixExt1 (0xD4) (from the 8th byte to the 10th byte) with reference to the type information (Fig. 3B) of the extended class of the item correspondence table 112, and then the string "K01" (from the 11th byte to the 14th byte) is described, thus being described as the value of the field "deptCode" (from the 8th byte to the 14th byte).

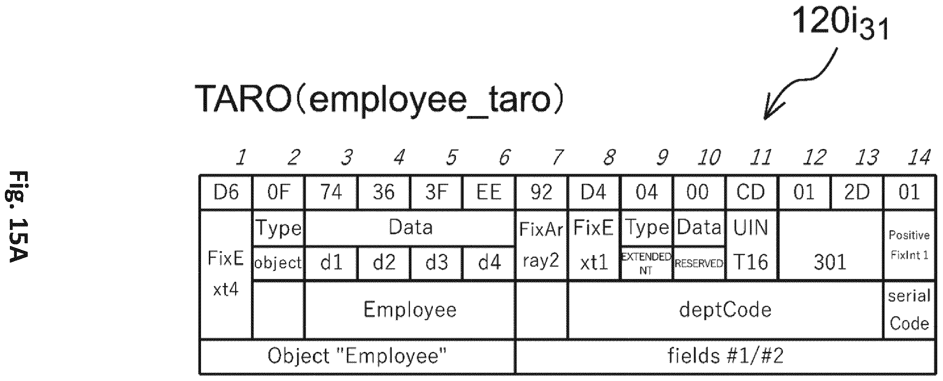

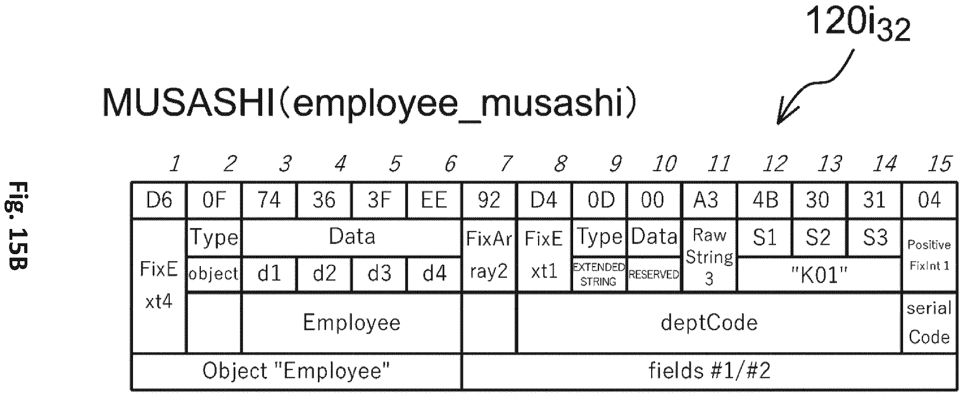

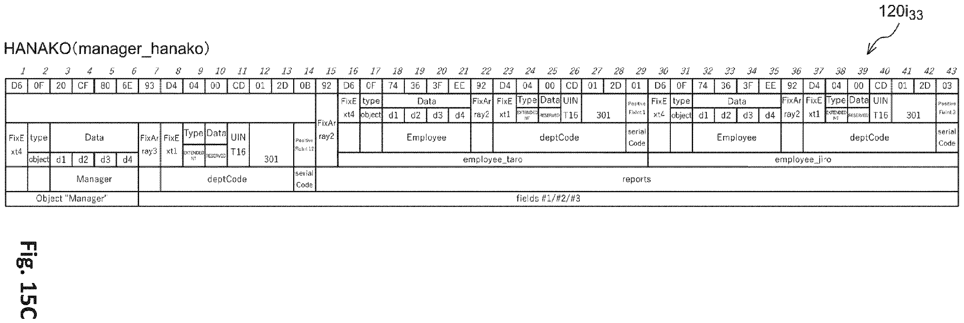

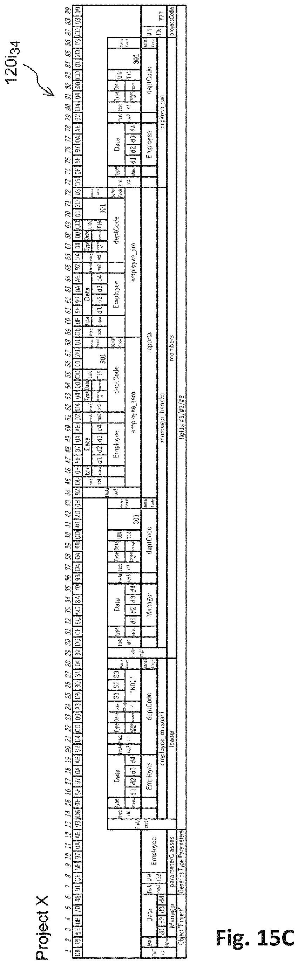

In addition, Figs. 15A to 15D are diagrams illustrating examples of a configuration of data obtained by serializing an instance, Fig. 15A being an example of data obtained by serializing an instance of Taro with regard to the "Employee" class, Fig. 15B being an example of data obtained by serializing an instance of Musashi with regard to the "Employee" class, Fig. 15C being an example of data obtained by serializing an instance of Hanako with regard to the "Manager" class, and Fig. 15D being an example of data obtained by serializing an instance of Project X with regard to the "Project" class.

Note that Figs. 15A to 15D are substantially the same as the examples illustrated in Figs. 13A to 13D; however, in the class of Fig. 15D, another feed "leader" can be described in the class "Project", independently from the list described in the field "member".

As described above, the serialized data adheres to the MessagePack specification, and configured to be interpretable by decomposition into blocks. In addition, the block may further include a block in a nested manner. A format identifier is described at the head of the block, the format identifier indicating the size and data type of the subsequent block. In other words, in the section "(3) Deserialization operation" described next, the received data string can be sequentially interpreted from the beginning on the basis of the format identifier, and restored to the structured data.

### (3) Deserialization operation

The deserialization means 101 follows a reverse procedure of the "(2) Serialization operation", and as a basic deserialization procedure, first, information associated with a class is acquired from serialized data, a class name is identified from the information, and field information (information necessary for restoring a field, including at least a field name and a type. A type or an extended data type specified by the type parameter of Generics may also be included, and information necessary for restoring the field may also be included) is acquired by reflection. Next, with reference to the item correspondence table 112, the type information of the class is confirmed from the data, and the field names are sorted from the alphabetical order to the defined order of the class, to restore the field values. The deserialization operation of the user defined type is described below.

Note that, at the time of deserialization, upon reception of a hash value of a class ID which is information associated with a class, information prepared in advance in which a class is associated with the class ID is searched, a full name of a class name and a definition of the class are acquired, and the class information is restored.

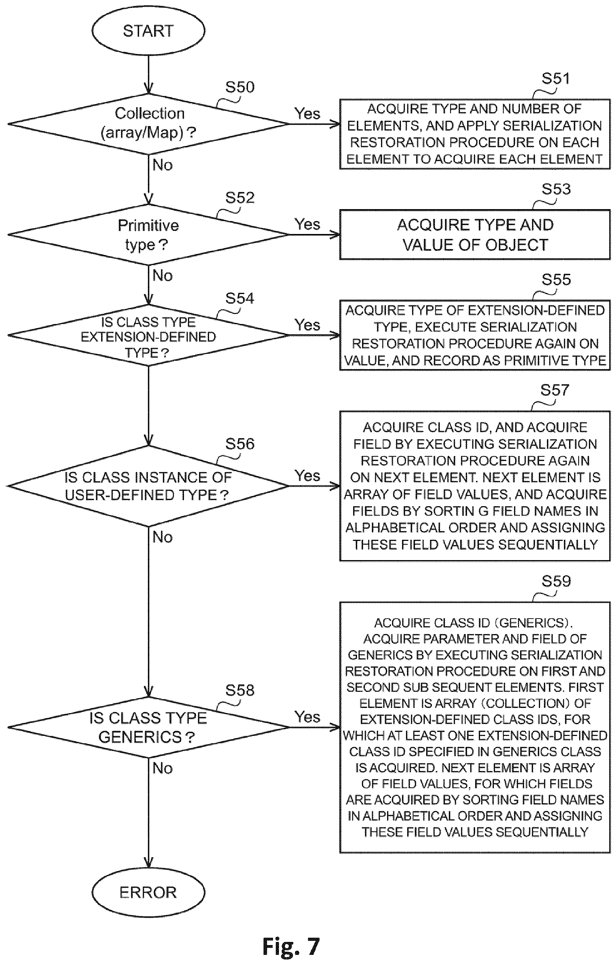

Fig. 7 is a flowchart illustrating an example of a deserialization operation.

The deserialization means 101 confirms whether the serialized data is obtained by serializing the Collection object (S50), and in a case where the serialized data is obtained by serializing the Collection object (S50; Yes), acquires the type and the number of elements, and applies the basic deserialization procedure to the block corresponding to each element to acquire each element (S51) .

Next, in a case where the serialized data is not obtained by serializing the Collection object (S50; No), the deserialization means 101 confirms whether the data is of the Primitive type (S52), and in a case where the data is of the Primitive type (S52; Yes), acquires a type and a value (S53).

Next, the deserialization means 101 confirms whether the serialized data is obtained by serializing an instance of a class of the extension-defined type (S54), and in a case where the serialized data is obtained by serializing an instance of a class of the extension-defined type (S54; Yes), acquires a type of the extension-definition type, and executes the deserialization procedure for the value to restore as a Primitive value (S55).

Next, in a case where the serialized data is obtained by serializing an instance of a class of the extension-defined type (S54; No), the deserialization means 101 confirms whether the serialized data is obtained by serializing an instance of a class of the user-defined type (S56), and in a case where the serialized data is obtained by serializing an instance of a class of the user-defined type (S56; Yes), acquires the class ID, acquires the corresponding class from the registered ID list, and identifies the class by using reflection. An instance of the identified class is generated, and for all fields of the instance, the acquired values are assigned in alphabetical order of the field names to restore the object (S57) .

Next, in a case where the serialized data is not obtained by serializing an instance of a class of the user-defined type (S56; No), the deserialization means 101 confirms whether the serialized data is obtained by serializing an instance of the Generics class of the user-defined type (S58), and in a case where the serialized data is obtained by serializing an instance of the Generics class of the user-defined type (S58; Yes), obtains the class ID (Generics), and acquires the type parameter and the field of the Generics, first by executing the deserialization procedure on the first and second subsequent elements, respectively (S59). The first element is Array (Collection) of the extension-defined type Class IDs, for which at least one extension-defined type Class ID, which is a type parameter specified in the Genetics class, is acquired. The class information of the type parameter is acquired from the acquired information associated with the type parameter, and used to acquire the type of the field for which the type parameter is specified. The second element is acquired by executing the deserialization procedure on the field values to acquire Array of the field values, sorting the field names in alphabetical order, and assigning the corresponding field values.

Next, in a case where the serialized data is not obtained by serializing an instance of the Generics class of the user-defined type (S58; No), the deserialization means 101 returns an error.

A specific operation procedure of the deserialization is described below with regard to a case where the data to be deserialized in above steps S56 to S59 is obtained by serializing the object of the class of the user-defined type.

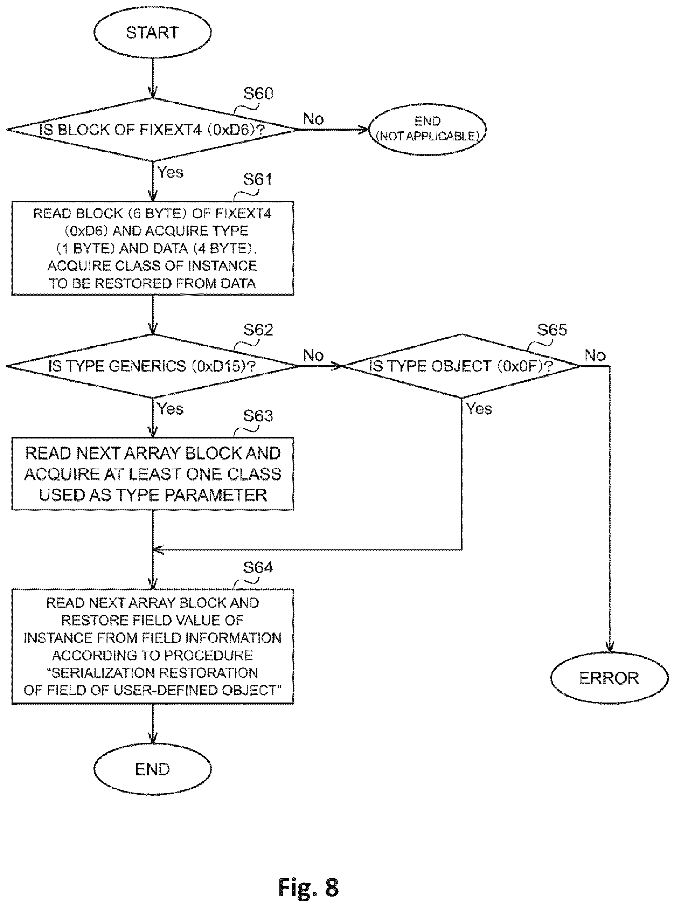

Fig. 8 is a flowchart illustrating another example of the deserialization operation.

First, the deserialization means 101 confirms whether the data type belongs to the block of FIXEXT4 (0xD6) (S60). In a case where the data type belongs to the block of FIXEXT4 (0xD6) (S60; Yes), a block (six bytes) of FIXEXT4 (0xD6) is read, and TYPE (one byte) and DATA (four bytes) defined in advance in the format identifier "FIXEXT4" are acquired. A value (class ID) associated with the class of the instance to be restored is acquired from DATA (S61).

Next, the deserialization means 101 confirms whether the TYPE field of FIXEXT4 is Generics (0x15) (S62). If TYPE is Generics (0x15) (S62; Yes), the next Array block is read, and at least one class used as a type parameter is acquired (S63). Note that the class of the parameter acquired here is applied to the class having the parameter at the time of serialization restoration of the field.

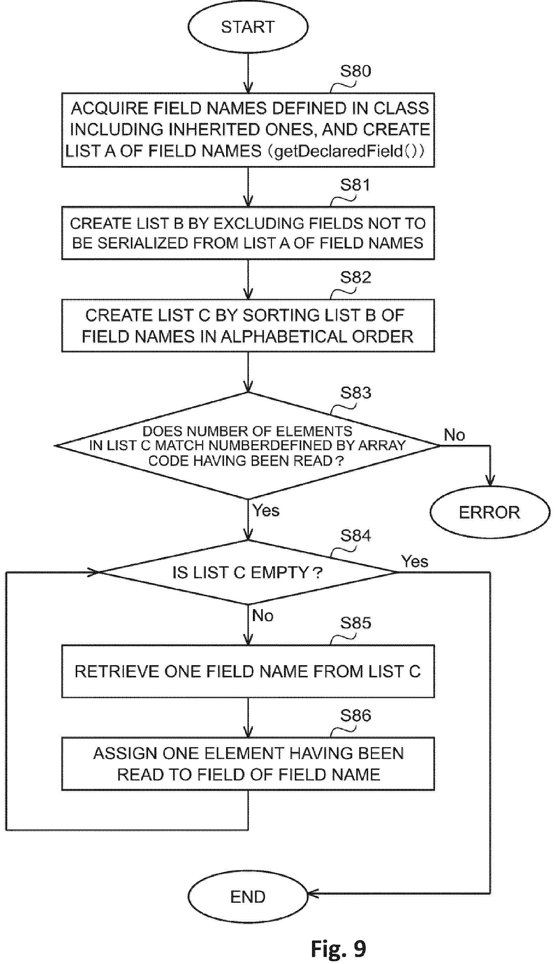

Next, the deserialization means 101 reads the next Array block, and restores the field value of the instance from the field information according to the flowchart shown in Fig. 9 (S64). Note that, regarding the Generic object, in a case where a parameter is used for the field declaration type, restoration as an instance of a class to which the parameter is applied is carried out.

Furthermore, in a case where the data type does not belong to the block of FIXEXT4 (0xD6) (S60; No), the deserialization means 101 terminates the process since this procedure is not applicable.

Furthermore, in a case where TYPE is not Generics (0x15) (S62; No), the deserialization means 101 advances the process to step S64 when TYPE is Object (0x0F) (S65; Yes), and returns an error when TYPE is not Object (0x0F) (S65; No).

Fig. 9 is a flowchart illustrating an example of the serialization operation.

First, the deserialization means 101 acquires a field name defined in a class (acquires up to a field name of an upper layer in a case where the inheritance has a plurality of layers), and creates a list A of field names (getDeclaredField()) (S80).

Next, the deserialization means 101 creates a list B by excluding fields not to be serialized from the list A of field names (S81). Here, Modifier of the field is checked with getModifiers. Note that Static and Transient are excluded.

Next, the deserialization means 101 creates a list C by sorting the list B of field names in alphabetical order (alternatively, by a sorting algorithm common between serialization and serialization restoration) (S82).

Next, the deserialization means 101 confirms whether the number of elements in the list C matches the number (the number of fields) defined by the array code having been read (S83).

In a case where the number of elements in the list C matches the number (the number of fields) defined by the array code having been read (S83; Yes), the deserialization means 101 confirms whether the list C is empty (S84), and if the list C is not empty (S84; No), retrieves one field name from the list C (S85) and assigns one element having been read to the field of the field name (S86). Here, the serialization restoration is recursively repeated until the element is acquired as Primitive Value. In addition, in a case where the element is FIXEXT1 (D4), restoration is carried out with a type specification as a type of a specified extended type. In addition, in a case where the type parameter of Generics is specified, assignment is carried out as the type to which the parameter is applied.

Next, when the list C becomes empty (S84; Yes), the deserialization means 101 terminates the process.

Alternatively, in a case where the number of elements in the list C does not match the number (the number of fields) defined by the array code having been read (S83; No), the deserialization means 101 returns an error.

### (Effects of embodiment)

According to the above-described embodiment, information associated with a class is recorded at the time of serialization, field names are sorted according to a predetermined rule and field values are recorded, serialized data is generated by omitting the field names, field names are acquired from the class names by reflection at the time of deserialization, and the field values are sorted and restored in the original order, whereby it is possible to reduce the restriction on objects to be serialized. In addition, since it is not necessary to record the field names, the size of serialized data can be reduced as compared with the case of recording the field names.

In addition, since the field names are sorted according to the predetermined rule and the field names are omitted, there is no language dependency, and since numbering of the field values is not necessary, maintainability and development efficiency are improved and the field names can be defined freely (defining a long field name does not result in long serialized data). In addition, since the field names are sorted in alphabetical order (predetermined order) at the time of serialization, the field information (name and type) is acquired by the reflection function at the time of deserialization, and the serialized data is assigned to the fields sorted in alphabetical order of the field names, it is not necessary to refer to the interface definition language (IDL) for the correspondence between the serialized data and the field names, and performing the reflection eliminates the need for the IDL. These collectively enable flexible support of the communication conditions and environments.

### [Other Embodiments]

The present invention is not limited to the above embodiment, and various modifications can be made without departing from the gist of the present invention.

In the above embodiment, the functions of the means 100 to 104 of the control unit 10 are realized by the program, but all or a part of the means may be realized by hardware such as an ASIC. In addition, the program employed in the above embodiment can be provided in a state of being stored in a recording medium such as a CD-ROM. Furthermore, replacement, deletion, addition, and the like of the steps described in the above embodiment can be made within such a scope that the gist of the present invention is not changed.

### Industrial Applicability

A serialization method, a deserialization method, an information processing program, an information processing apparatus, and a communication system are provided that flexibly support communication conditions and reduce the size of communication data.

### Reference Signs List

- 1: Server device
- 2: Terminal device
- 10: Control unit
- 11: Storage unit
- 12: Memory
- 13: Communication unit
- 100: Data reception means
- 101: Deserialization means
- 102: Object processing means
- 103: Serialization means
- 104: Data transmission means
- 110: Information processing program
- 111: Recording data
- 112: Item correspondence table
- 120: Object
- 121: Object

## Claims

1. A serialization method comprising:
a step of describing information associated with a class of an object;
a step of sorting field names of the object according to a predetermined order and describing field values corresponding to the field names in a sorted order; and
a step of outputting the described information associated with the class and the sorted field values as serialized data.

2. The serialization method according to claim 1, wherein in a case where the object is an instance of a subclass, field names defined by a superclass are sorted in a predetermined order together with the field names defined by the subclass.

3. The serialization method according to claim 1 or 2, wherein in the step of describing the field values in the sorted order, in a case where it is defined to describe the values of the fields of the object as an array, the values of the fields of the object are described as the array according to the sorted order.

4. The serialization method according to any one of claims 1 to 3, wherein the information associated with the class is a hash value obtained by converting at least a class name of the object by a predetermined function.

5. A deserialization method comprising:
a step of acquiring information associated with a class from serialized data of an object;
a step of acquiring field information of the class;
a step of acquiring values corresponding to field values of the serialized data of the object as being arranged corresponding to the acquired field names sorted in a predetermined order, and restoring the values together with the acquired field names; and
a step of outputting the acquired information associated with the class, the field information, and the field values as a restored object.

6. The deserialization method according to claim 5, wherein in the step of restoring, in a case where the field values of the object are described as an array, the values corresponding to the field values in the serialized data of the object are acquired as being described as the array by sorting the acquired field names in the predetermined order, and restored together with the acquired field names.

7. An information processing program that causes a computer to function as a serialization means configured to: describe information associated with a class of an object; sort field names of the object according to a predetermined order; describe field values corresponding to the field names in a sorted order; and output the described information associated with the class and the sorted field values as serialized data.

8. An information processing program that causes a computer to function as a deserialization means configured to: acquire information associated with a class from serialized data of an object; acquire field information of the class; acquire values corresponding to field values of the serialized data of the object as being arranged corresponding to the acquired field names sorted in a predetermined order; restore the values together with the acquired field names; and output the acquired information associated with the class, the field information, and the field values as a restored object.

9. An information processing apparatus comprising a serialization means configured to: describe information associated with a class of an object; sort field names of the object according to a predetermined order; describe field values corresponding to the field names in a sorted order; and output the described information associated with the class and the sorted field values as serialized data.

10. An information processing apparatus comprising a deserialization means configured to: acquire information associated with a class from serialized data of an object; acquire field information of the class; acquire values corresponding to field values of the serialized data of the object as being arranged corresponding to the acquired field names sorted in a predetermined order; restore the values together with the acquired field names; and output the acquired information associated with the class, the field information, and the field values as a restored object.

11. A communication system configured by communicably connecting a plurality of the information processing apparatuses according to claims 9 and 10.
